# EUROPÄISCHE PATENTANMELDUNG

(11) **EP 1 354 759 A1**
(43) Veröffentlichungstag der Anmeldung: **22.10.2003**
(21) Anmeldenummer: 03450081.9
(22) Anmeldetag: 09.04.2003
(51) Int. Cl.: B60P 1/00, B60R 5/04

(54) **Ausziehbarer Ladeboden**

(30) Priorität: 19.04.2002 AT 6082002
(71) Anmelder: Hoerbiger Hydraulik GmbH, 86956 Schongau (DE)
(72) Erfinder: Rinninger, Gerhard, 87600 Kaufbeuren (DE)
(74) Vertreter: Laminger, Norbert, Mag.

(57) **Zusammenfassung**

Ausziehbarer Ladeboden (1), insbesonders für Kraftfahrzeuge, der mit Führungselementen (2), beispielsweise Rollen oder Gleitern, entlang zumindest einer im wesentlichen horizontalen Führungsbahn (4) verlagerbar ist, wobei allenfalls ein Antriebsmittel (6) vorgesehen ist, welches den Ladeboden zumindest mittelbar zumindest in einer Richtung mit einer Kraft beaufschlagen kann. Um zumindest bei der kraftaufwendigen Ausfahrbewegung den Ladeboden (1) zur Gänze kraftunterstützt oder automatisch bewegbar zu machen, ist vorgesehen, daß zumindest eine Führungsbahn (4) mindestens zwei Abschnitte aufweist, welche miteinander einen Winkel größer als 0° und maximal 90° einschließen.

Um den erwünschten Geschwindigkeitsunterschied der aufeinanderfolgenden Abschnitte der Ausfahrbewegung des Ladebodens (1) mit Hilfe eines einzigen Antriebsmittels (6) realisieren zu können und auch den sehr großen Arbeitsweg bewältigen zu können, ist vorteilhafterweise zwischen dem Antriebsmittel (6) und dem Ladeboden (1) zumindest über einen Teilbereich der Ausfahrbewegung ein Hebelmechanismus zwischengeschaltet.

## Beschreibung

Ausziehbarer Ladeboden, insbesonders für Kraftfahrzeuge, der mit Führungselementen, beispielsweise Rollen oder Gleitern, entlang zumindest einer im wesentlichen horizontalen Führungsbahn verlagerbar ist, wobei allenfalls ein Antriebsmittel vorgesehen ist, welches den Ladeboden zumindest mittelbar zumindest in einer Richtung mit einer Kraft beaufschlagen kann.

Derartige Komponenten sind im Gepäckraum an die Karosserie angebunden und bilden die Beladungsfläche. Diese soll zum Be- und Entladen herausgefahren werden. Bekannt sind derartige Einrichtungen als nur in der Horizontalen ausziehbar oder mit flachem Anstiegswinkel versehene manuell oder automatisch zu betätigende Systeme. Im einfachsten Fall, bei dem keine Höhendifferenz überwunden werden muß, der Ladeboden also in zumindest gleicher Höhe liegt wie die hintere Kante des Gepäckabteils, genügt eine Schienen-Anordnung, auf welcher der Ladeboden im wesentlichen horizontal verschoben werden kann. Eine solche Lösung ist beispielsweise in der WO01/53131 beschrieben.

Da diese Beladungsfläche in einigen Fällen in einer Ebene oder tiefer als rückwärtige fahrzeugfeste Bauteile, wie z.B. dem Stoßfänger, sind, ist hier vor dem Herausfahren ein Anheben der Beladungsfläche notwendig, vor, nach oder während der horizontalen Bewegung. Eine mögliche Lösung ist in der WO89/07569 beschrieben, deren Ladeboden über eine Hebe-Einrichtung vertikal angehoben bzw. abgesenkt und dann bzw. nachher manuell horizontal verschoben werden kann. Bei der Konstruktion der EP 0 893 302 A2 dagegen ist der Ladeboden entlang von Stützschienen horizontal verschiebbar, welche Stützschienen ihrerseits auf automatisch mittels eine Verstellzylinders verschwenkbaren Parallelogramm-Lenkern höhenverstellbar und in geringem Maß im Zuge der Höhenverstellung auch horizontal verschiebbar sind. Die übrige Horizontalbewegung erfolgt dann wiederum manuell. Aufgrund der unterschiedlichen Strecken der Hub- und Ausfahrbewegung sowie der dafür notwendigen unterschiedlichen Kräfte liegt bis heute keinerlei Lösung vor, welche eine Unterstützung bzw. komplette Übernahme der Bedienungskraft über den gesamten Weg des Ladebodens bietet.

In der DE 197 31 324 A1 ist ein ausfahrbarer Ladeboden beschrieben, der mittels eines einzigen Antriebsmittels, das den Ladeboden über den gesamten Arbeitsweg beaufschlagen kann, in die ausgefahrene Stellung gebracht werden kann. Dabei wird der Ladeboden aber zuerst auf verschwenkbaren Lenkern angehoben, dann entlang einer einzigen geraden Führungsbahn ausgefahren.

Eine Führungsbahn für allein das fahrzeugseitige Ende des Ladebodens zeigt die DE 100 06 617 C1, welche Führungsbahn nach außen hin ansteigt, aber ganz gerade ist. Der heckseitige Bereich des Ladebodens läuft auf einer höhenverstellbaren Abstützstruktur. Für die Ausfahrbewegung ist ebenfalls ein Antriebsmittel entlang der geraden Führungsbahn vorgesehen, nämlich eine motorbetriebene Spindel.

Es war daher die Aufgabe der vorliegenden Erfindung, einen ausziehbaren Ladeboden anzugeben, welcher unter Vermeidung der oben genannten Nachteile zumindest bei der kraftaufwendigen Ausfahrbewegung zur Gänze kraftunterstützt oder automatisch bewegbar ist.

Zur Lösung dieser Aufgabe ist der eingangs beschriebene Ladeboden dadurch gekennzeichnet, daß zumindest eine Führungsbahn mindestens zwei Abschnitte aufweist, welche miteinander einen Winkel größer als 0° und maximal 90° einschließen. Damit ist ein Durchlaufen der Führungsbahn in einem Zug und allenfalls unter Einsatz eines Antriebsmittels für die gesamte Ausfahrbewegung möglich.

Gemäß einem weiteren Merkmal der Erfindung ist vorgesehen, daß zumindest eine Führungsbahn zwei im wesentlichen parallele, jedoch vertikal beabstandete Abschnitte aufweist, welche durch einen dritten Abschnitt miteinander verbunden sind, der den vertikalen Abstand überbrückt, wobei der in Ausfahrrichtung gesehen letzte Abschnitt vertikal gesehen am höchsten angeordnet ist. Damit ist eine Form der vom Ladeboden durchlaufenen Bahn definiert, mit der in einer kontinuierlichen Bewegung und auch allenfalls mit ein- und demselben Antrieb unterstütztes bzw. automatisiertes Anheben und anschließendes horizontales Weiter-Ausfahren verwirklicht werden kann.

Eine ähnliche Bewegungscharakteristik kann durch eine Ausführungsform der Erfindung erzielt werden, bei welcher zumindest eine Führungsbahn zwei Abschnitte aufweist, wobei ein in Ausfahrrichtung des Ladebodens gesehen erster Abschnitt nach außen hin abfällt und wobei der anschließende Abschnitt nach außen hin ansteigt.

Dabei kann vorteilhafterweise vorgesehen sein, daß sich den beiden Abschnitten unmittelbar ein dritter, äußerster Abschnitt anschließt, der im wesentlichen horizontal verläuft.

Eine wieder andere Ausführungsform der Erfindung ist dadurch gekennzeichnet, daß zumindest eine horizontal verlaufende Führungsbahn vorgesehen ist, welche als ersten Abschnitt in Ausfahrrichtung zumindest einen, im wesentlichen vertikalen Abschnitt aufweist, wobei der Ladeboden zusätzlich noch mit einem Hubmechanismus in Verbindung steht. Dabei wird zwar ein Hubmechanismus eingesetzt, wobei die Ausfahrbewegung im Gesamten aber durch einen kontinuierlichen Antrieb bewerkstelligt werden kann. Allenfalls können Hubmechanismus und Antrieb für das Ausfahren des Ladebodens identisch sein.

Diese Möglichkeit, mit einem Antriebsmittel gleichzeitig das Anheben als auch die Ausfahrbewegung bewerkstelligen zu können, ist gemäß einem weiteren Merkmal der Erfindung durch eine Konstruktion gegeben, bei welcher der Hubmechanismus aus einer fahrzeugfesten Hubrampe und einer nach außen hin abwärts geneigten zweiten Führung besteht, welche zweite Führung mittels eines Verbindungsschlittens parallel in vertikaler Richtung verschiebbar ist.

Dabei ist vorteilhafterweise vorgesehen, daß ein Antriebsmittel am Verbindungsschlitten angreift, so daß dieses Antriebsmittel eine im wesentlichen rein lineare Bewegung ausführen muß.

Meist wird es von Vorteil sein, wenn die fahrzeugfeste Hubrampe nach außen hin ansteigendend ausgeführt ist.

Bei einer Ausführungsform der Erfindung, bei welcher der Hubmechanismus aus zumindest einem im wesentlichen vertikalen Antriebsmittel und einer nach außen hin abwärts geneigten zweiten Führung besteht, welche zweite Führung mittels eines Verbindungsschlittens parallel in vertikaler Richtung verschiebbar ist, erfolgt durch die Kombination der Führungsbahn - horizontal verlaufend und als ersten Abschnitt in Ausfahrrichtung zumindest einen, im wesentlichen vertikalen Abschnitt aufweisen - und der geneigten zweiten Führung eine Zwangsführung des Ladebodens in zuerst eine reine Aufwärtsbewegung, der sich dann eine reine Horizontalbewegung anschließt.

Gemäß einer anderen Ausführungsform der Erfindung ist vorgesehen, daß zumindest zwei horizontal verlaufende Führungsbahnen zumindest in Bewegungsrichtung des Ladebodens beabstandet voneinander vorgesehen ist, welche aus einem vertikal nach oben verlaufenden ersten Abschnitt in Ausfahrrichtung und einem sich unmittelbar daran anschließenden, im wesentlichen horizontalen Abschnitt bestehen.

Um ein Verkanten des Ladebodens weitestgehend zu vermeiden, sind vorteilhafterweise zwei gleich gestaltete Führungsbahnen an den zwei gegenüberliegenden Längsseiten des Ladebodens vorgesehen.

Da bei den oben beschriebenen Gestaltungen der Führungsbahnen der Antrieb des Ladebodens eine kontinuierliche Bewegung über den gesamten Ausfahrweg durchführen kann, ist gemäß einem weiteren Merkmal der Erfindung vorgesehen, daß ein im wesentlichen horizontal liegender, vorzugsweise hydraulischer Arbeitszylinder als Antriebsmittel vorgesehen ist.

Um den erwünschten Geschwindigkeitsunterschied der aufeinanderfolgenden Abschnitte der Ausfahrbewegung des Ladebodens mit Hilfe eines einzigen Antriebsmittels realisieren zu können und auch den sehr großen Arbeitsweg bewältigen zu können, ist vorteilhafterweise zwischen dem Antriebsmittel und dem Ladeboden zumindest über einen Teilbereich der Ausfahrbewegung ein Hebelmechanismus zwischengeschaltet.

In besonders vorteilhafter Weise ist gemäß einem weiteren Merkmal der Erfindung der Hebelmechanismus als Scherenmechanismus ausgebildet, von welchem ein sich kreuzendes Hebelpaar am Fahrzeug angelenkt und das abschließende Drehgelenk mit dem Ladeboden verbunden ist.

Wenn dabei das Antriebsmittel zwei in Bewegungsrichtung des Ladebodens beabstandete Anschläge aufweist, wobei ein Anschlag in einem ersten Abschnitt der Ausfahrbewegung am Ladeboden oder am abschließenden Drehgelenk des Scherenmechanismus anliegt, und wobei der zweite Anschlag in einem zweiten Abschnitt der Ausfahrbewegung am Kreuzungspunkt der sich kreuzenden Hebel des Scherenmechanismus anliegt, kann der Antrieb zuerst eine langsame Bewegung im ersten Abschnitt der Ausfahrbewegung bewirken, solange er direkt am Ladeboden angreift, während nach Übergabe auf den Scherenmechanismus dessen "Geschwindigkeitsübersetzung" zum Tragen kommt und die nachfolgende Bewegung mit entsprechend erhöhter Geschwindigkeit erfolgt, wobei auch der vom Ladeboden zurückgelegte Weg gegenüber dem Hub des Antriebsmittels entsprechend vervielfacht ist.

Um zu dem Zeitpunkt eine definierte und der Kinematik der Bewegung entsprechende Lage der Anschläge, des Scherenmechanismus und des Ladebodens zu gewährleisten, kann gemäß einem weiteren Merkmal der Erfindung vorgesehen sein, daß zwischen dem Ladeboden oder dem abschließenden Drehgelenk des Scherenmechanismus und dem Kreuzungspunkt der sich kreuzenden Hebel auf der dem zweiten Anschlag gegenüberliegenden Seite ein elastisches Element, vorzugsweise eine Druckfeder, derart eingespannt ist, daß das elastische Element über den gesamten ersten Abschnitt der Ausfahrbewegung am Kreuzungspunkt anliegt und diesen mit einer Kraft beaufschlagt.

In der nachfolgenden Beschreibung soll die Erfindung anhand der beigefügten Zeichnungen in mehreren bevorzugten Ausführungsbeispielen näher erläutert werden.

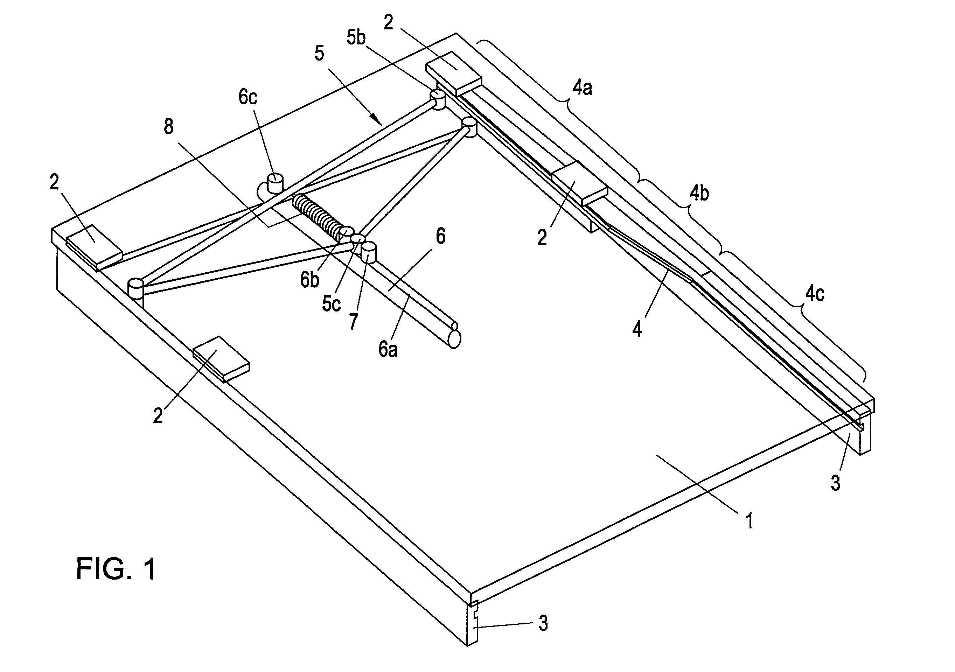

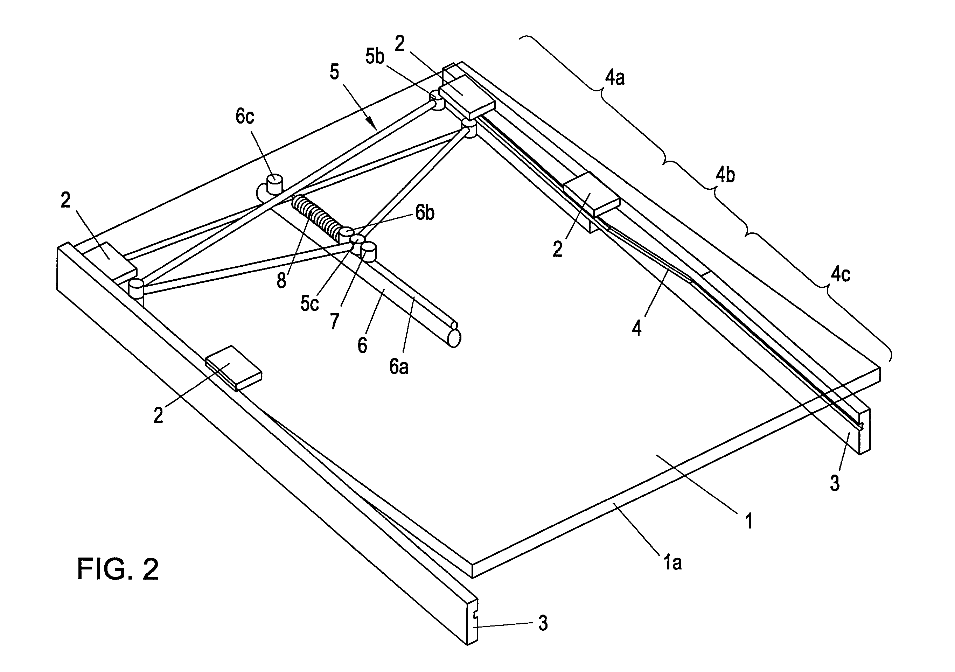

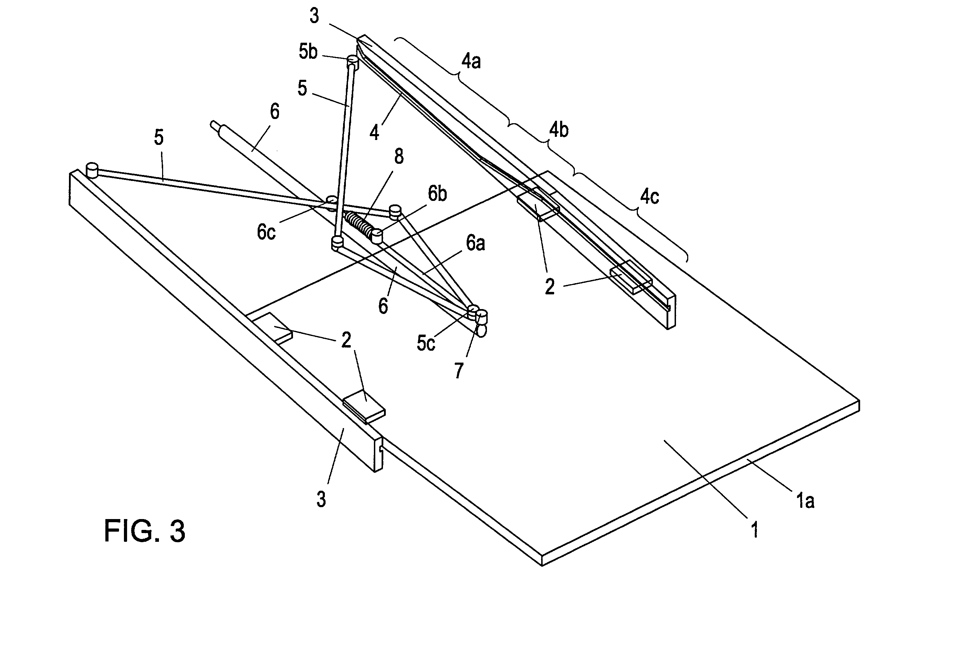

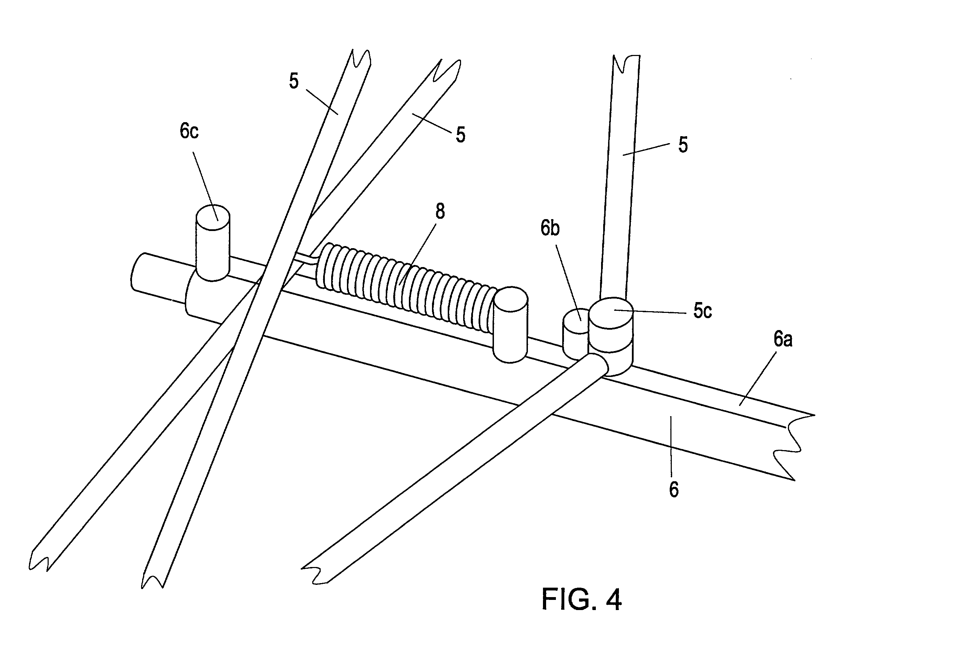

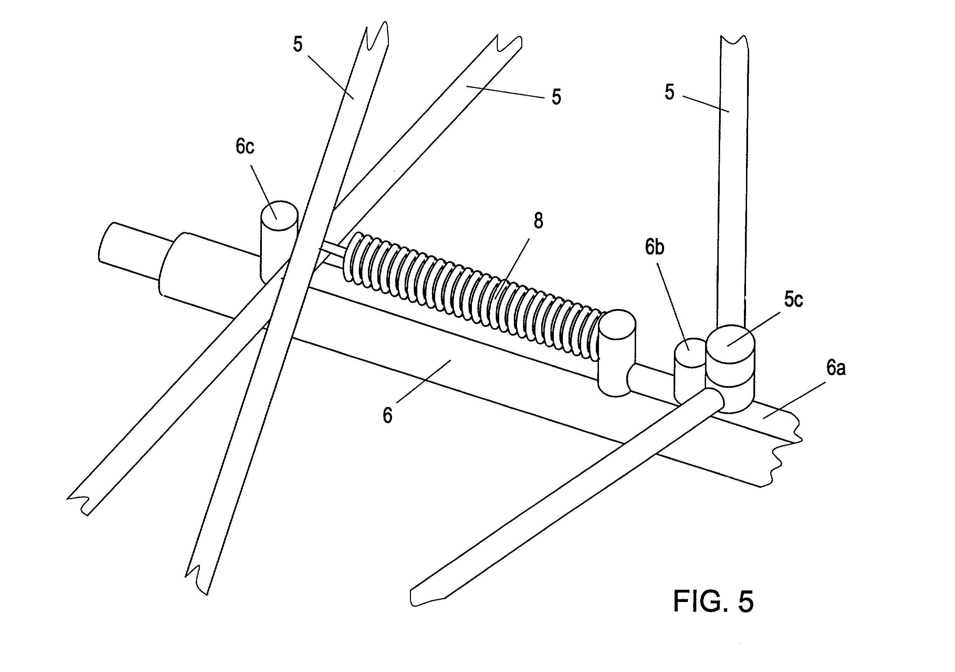

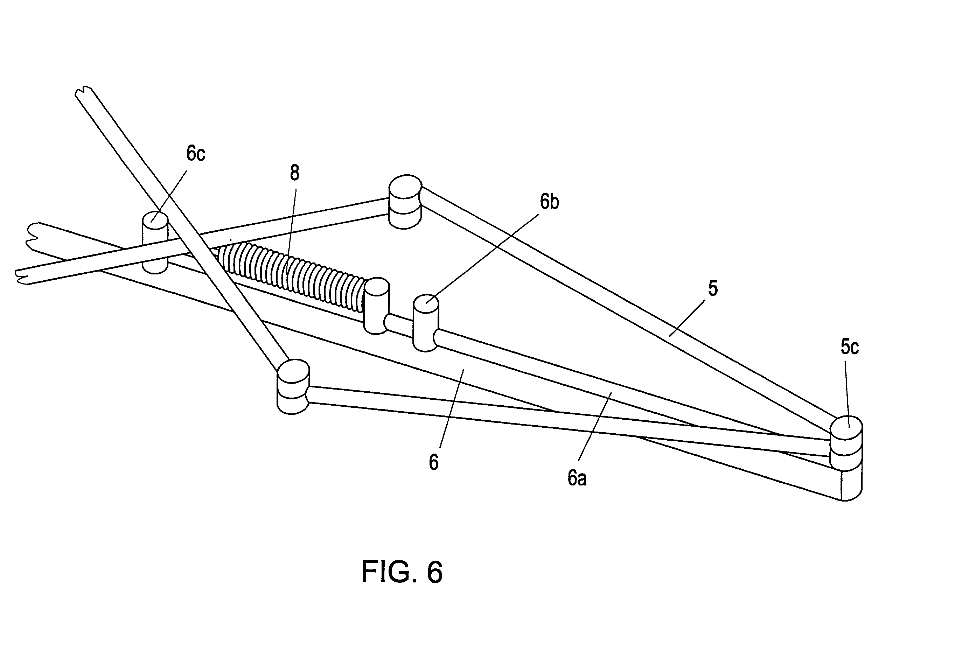

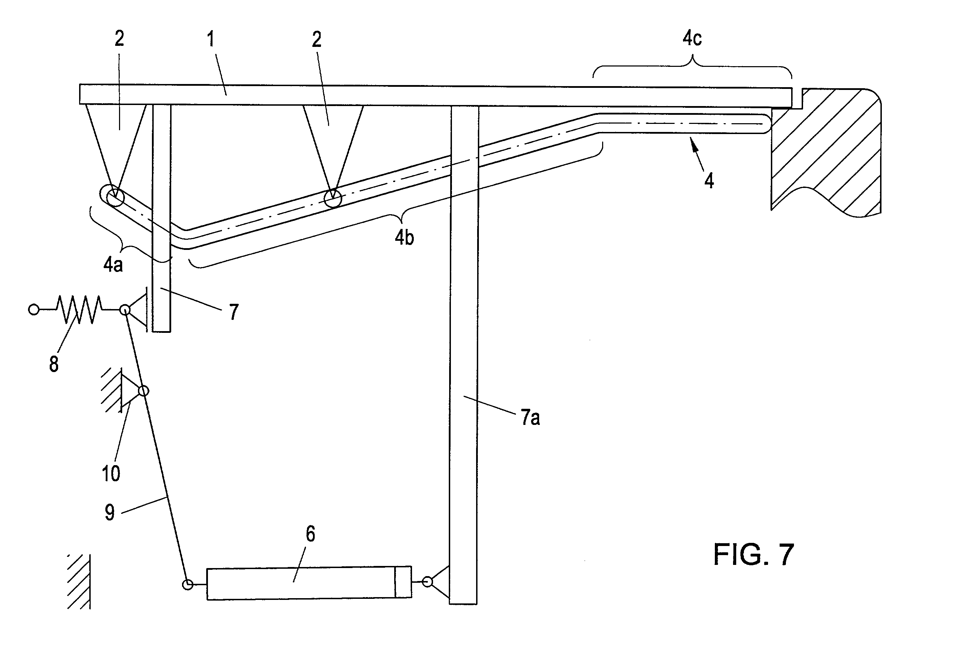

Dabei zeigt die Fig. 1 eine perspektivische Ansicht eines durch einen Scherenmechanismus betätigten und auf einer erfindungsgemäßen Führungsbahn verschiebbaren Ladebodens in vollkommen eingefahrener Stellung, wobei manche Teile in durchsichtiger Phantomdarstellung gezeichnet sind, Fig. 2 ist eine Ansicht des erfindungsgemäßen Ladebodens der Fig. 1, jedoch in bereits geringfügig weiter ausgefahrener Stellung, Fig. 3 ist eine Ansicht des Ladebodens der Fig. 1 in komplett ausgefahrener und angehobener Position, Fig. 4 ist ein Detail des Antriebsmechanismus des erfindungsgemäßen Ladebodens der Fig. 1 bis 3 in größerem Maßstab und im ersten Abschnitt der Ausfahrbewegung des Ladebodens, Fig. 5 ist ein Detail entsprechend Fig. 4, jedoch in weiter ausgefahrenem Zustand, und Fig. 6 ist ein Detail des Antriebsmechanismus in komplett ausgefahrener Stellung. Die Fig. 7 bis 15 sind schematische Ansichten von weiteren möglichen Ausführungsformen der erfindungsgemäßen Führungsbahnen und/oder Antriebsmechanismen dar.

Der die Beladung aufnehmende, eigentliche und meist eben plattenförmig gestaltete Ladeboden 1 ist mit Führungselementen 2, beispielsweise Rollen oder Gleitern, versehen. Diese Führungselemente 2 sind vorzugsweise unterhalb der beladbaren Fläche vorgesehen und befinden sich im wesentlichen an den dem Fahrzeuginneren nächstliegenden Eckpunkten des Ladebodens 1 sowie etwa in dessen Längsmitte an den seitlichen Rändern. Die Führungselemente 2 jeweils einer Längsseite greifen in jeweils eine sich in Längs- und/oder Bewegungsrichtung des Ladebodens 1 erstreckende Führung 3 ein, genauer gesagt meist in eine in dieser Führung 3 ausgearbeitete, nutartige Führungsbahn 4, ein. Am hinteren Teil des Ladebodens 1 greift ein nachfolgend noch näher erläuterter Antriebsmechanismus an, der aus einem Scherenmechanismus 5 und einem vorzugsweise hydraulischen Arbeitszylinder 6 gebildet ist.

Die Führungsbahn 4 weist mindestens in der Ausführungsform der Fig. 1 bis 3 drei Abschnitte 4a, 4b, 4c auf. Dabei sind zwei Abschnitte, und zwar der in Bewegungsrichtung beim Ausfahren des Ladebodens 1 erste Abschnitt 4a und der letzte Abschnitt 4c parallel zueinander, jedoch in der Höhe relativ zueinander versetzt, wobei der Abschnitt 4c meist höher liegen wird. Zwischen diesen beiden Abschnitten 4a, 4c ist ein dritter Abschnitt 4b vorgesehen, welcher die Abschnitte 4a und 4c in kontinuierlicher Weise, d.h. unter Bildung einer durchgehenden Führungsbahn 4 für die Führungselemente 2 des Ladebodens 1, verbindet. Der jeweils erste bzw. letzte Abschnitt 4a bzw. 4c schließt mit dem mittleren Abschnitt 4b einen Winkel größer als 0° und maximal 90° ein.

Vorteilhafterweise ist ein kleines Stück am Anfang des ersten Abschnittes 4a der Führungsbahn 4 in Ausfahrrichtung des Ladebodens 1 abwärts geneigt (was am besten in Fig. 3 zu erkennen ist), wodurch das Anheben des Hinterendes des Ladebodens 1 noch rascher und unmittelbarer erfolgt als bei komplett geradem Abschnitt 4a. Allenfalls kann der gesamte Abschnitt 4a abwärts geneigt sein (siehe dazu auch Fig. 7). Ein weiterer Vorteil dieses abwärts geneigten Abschnittes, der ganz zu Beginn der Ausfahrbewegung des Ladebodens 1 durchlaufen wird, liegt darin, daß die Antriebsleistung des Antriebsmittels, vorzugsweise des Arbeitszylinders 6, durch die Gewichtskraft des Ladebodens 1 unterstützt wird.

Zum Antrieb des Ladebodens 1 ist ein hydraulischer Arbeitszylinder 6 in Bewegungsrichtung des Ladebodens 1 und vorzugsweise auch unterhalb der zu beladenden Fläche vorgesehen. Dieser Arbeitszylinder 6 greift über eine parallel zum Zylindergehäuse bzw. der Kolbenstange liegende Stange 6a an einem ersten Anschlag 7 an, der ebenfalls an der Unterseite des Ladebodens 1 vorgesehen ist. Im dargestellten, bevorzugten Ausführungsbeispiel der Fig. 1 bis 6 ist zwischen diesem Anschlag 7 und der Stange 6a des Arbeitszylinders 6 das Endgelenk 5c einer Hebelkonstruktion, nämlich des Scherenmechanismus 5, direkt zwischengeschaltet. Dieser Scherenmechanismus 5 besteht aus zwei zueinander symmetrischen Zweischlägen mit je drei Drehgelenken, wobei das erste Drehgelenk 5b jeweils an einem Hebelende zur Abstützung an der Karosserie vorgesehen ist. Das letzte Drehgelenk 5c ist - wie in Fig. 4 im Detail deutlicher zu erkennen ist - zwischen dem Arbeitszylinder 6 und dem Anschlag 7 des Ladebodens 1 zwischengeschaltet. Dazu ist an der Stange 6a ein erster Mitnehmer 6b vorgesehen, der das letzte Drehgelenk 5c und damit mittelbar über das Drehgelenk 5c und den Anschlag 7 auch den Ladeboden 1 im ersten Abschnitt der Ausfahrbewegung mit der Kraft des Arbeitszylinders 6 beaufschlagt. Die karosseriefesten Hebel des Scherenmechanismus laufen hinter dem ersten Anschlag 6b über Kreuz durch, wobei hinter dieser Kreuzungsstelle ein weiterer Anschlag 6c an der Stange 6a vorgesehen ist, der im ersten Abschnitt der Ausfahrbewegung des Ladebodens 1 dieser Kreuzungsstelle mit sich jedoch im Zuge der Bewegung immer mehr verringerndem Abstand "hinterherläuft". Zwischen einer mit der Stange 6a verbundenen Einspannstelle und der Kreuzungsstelle der karosseriefesten Hebel des Scherenmechanismus 5 ist eine Druckfeder 8 eingespannt, durch welche diese Hebel in Richtung des in Bewegungsrichtung hinteren Anschlags 6c gedrückt werden. Die Feder 8 bewirkt somit, daß der Ladeboden 1 nicht zwischen den Anschlägen 6b und 6c undefiniert hin und her wandert, sondern immer am kinematisch richtigen Anschlag anliegt. Die Feder 8 hat zusätzlich noch den Effekt, daß sie beim Absenken durch das Eigengewicht des Ladebodens 1 und dessen Beladung gespannt wird und diese Energie beim Anheben wieder abgegeben wird und somit den Antrieb 6 in dieser Phase unterstützt.

Die Fig. 2 zeigt das System der Fig. 1 mit schon etwas weiter ausgefahrenem Ladeboden 1, wobei sich dessen dem Fahrzeug abgewandtes Ende 1a bereits etwas gehoben hat. Diese Hubbewegung des hinteren Endes 1a des Ladebodens 1 ist dadurch bewirkt worden, dass die in Bewegungsrichtung vorderen Führungselemente 2 in den ansteigenden Abschnitt 4b der Führungsbahn 4 gelangt sind, während sich die hinteren Führungselemente noch - allenfalls nach Absenkung der fahrzeugnäheren Seite des Ladebodens 1 in einem allerersten, in Ausfahrrichtung des Ladebodens 1 abwärts verlaufenden Abschnittes der Führungsbahn 4 (siehe Fig. 3 und Fig. 7) - im ersten Abschnitt 4a befinden. Während zuerst die vorderen, dann auch die hinteren Führungselemente 2 den Abschnitt 4b der Führungsbahn 4 durchlaufen und der Ladeboden 1 nach und nach zur Gänze auf das Niveau des in Bewegungsrichtung hinteren, höheren Abschnittes 4c der Führungsbahn angehoben wird, wechselt auch der Antrieb des Ladebodens 1 von einem Zustand, in dem bei langsamer Ausfahrbewegung das Heben - mit hoher Kraft aber relativ wenig Hubweg erfolgt - in einen zweiten Zustand, bei dem das Ausfahren mit weniger Kraft erfolgen kann, dafür aber mit großem Hubweg und einer deutlich höhere n Geschwindigkeit. Da als Antriebselement der in seiner Antriebsleistung allenfalls nur unwesentlich veränderliche Arbeitszylinder 6 vorgesehen ist, wird dieser Übergang durch eine mechanische Umsetzung mit Hilfe des Scherenmechanismus 5 realisiert, der bei geringerer Kraft ein Vielfaches an Ausfahrweg realisiert und die benötigte Zeit für das Ausfahren verkürzt.

Wie in Fig. 5 zu erkennen ist, liegen etwa in der Bewegungsphase der Fig. 2 für kurze Zeit sowohl der in Bewegungsrichtung vordere Anschlag 6b am Drehgelenk 5c als auch der hintere Anschlag 6c an der Kreuzungsstelle der karosseriefesten Hebel des Scherenmechanismus 5 an. Die Druckfeder 8 ist in dieser Phase schon teilweise entlastet. In jedem Fall ist eine verbleibende Vorspannung der Feder 8 wichtig, um immer den kinematisch richtigen Anschlag in Kontakt mit dem Ladeboden 1 zu halten.

Bei weiterem Ausfahren des Arbeitszylinders 6 löst sich schließlich das vordere Gelenk 5c des Scherenmechanismus 5 und damit auch der mit dem Ladeboden 1 verbundene Anschlag 7 vom in Bewegungsrichtung vorderen Anschlag 6b. Das vordere Gelenk 5c bleibt jedoch in Kontakt mit dem Anschlag 7 am Ladeboden 1 und treibt diesen nunmehr aufgrund der Beaufschlagung der Kreuzungsstelle der karosseriefesten Hebel des Scherenmechanismus 5 durch den hinteren Anschlag 6c der Stange 6a mit höherer Geschwindigkeit und größerem Hubweg an. Fig. 6 stellt diese Phase auch im Detail vergrößert dar. Der Ladeboden 1 ist nun komplett ausgefahren und auf das höhere Niveau des in Ausfahrrichtung höchstliegenden Abschnittes 4c der Führungsbahn 4 angehoben.

Der Antriebsmechanismus mit dem Arbeitszylinder 6 als Antriebselement befindet sich vorteilhafterweise in Querrichtung mittig zum Ladeboden 1 und zur Längsachse symmetrisch unterhalb des Ladebodens 1. Die dadurch mittige Anlenkung des Antriebs, entweder direkt des Arbeitszylinder 6 über den ersten Anschlag 6b oder mittelbar über den anderen Anschlag 6c und den Scherenmechanismus 5, und die nur in Richtung der Längsachse verlaufenden Antriebskräfte führen zu einem verspannungsfreien und verkantungsfreien Lauf des Ladebodens 1 in der Führungsbahn 4. Die Vervielfachung des Antriebswegs durch den Scherenmechanismus 5 ermöglicht den Einsatz eines kurzen, in Längsrichtung angeordneten Antriebselements, wodurch trotz der hohen nötigen Stabilität dieser Antriebselemente und das meist Nichtvorhandensein von Sollknickstellen dennoch die Crashbedingungen der Fahrzeughersteller erfüllt sind. Insgesamt läßt sich durch die erfindungsgemäße Konstruktion ein in der Vertikalen völlig versenkbarer und horizontal zumindest mehr als zur Hälfte ausfahrbarer Ladeboden 1 realisieren, wobei auch Beladungsgewichte, die ein manuelles Heben ausschließen, möglich sind und zu dessen Betätigung der unterhalb des Ladebodens 1 zur Verfügung stehende Raum genutzt wird. Die Verwendung von nur einem Antriebselement gestattet die kostengünstige Ausführung des automatischen Antriebes.

Nachfolgend sollen weitere Ausführungsformen, insbesonders für die Führungsbahn 4 und/oder den Hubmechanismus, unter Bezugnahme auf die Fig. 7 bis 17 erläutert werden.

Bei der ersten alternativen Ausführungsform der Fig. 7 ist deutlich zu erkennen, daß der erste Abschnitt der Führungsbahn 4a in Bewegungsrichtung abwärts geneigt ist, während - ohne einen im wesentlichen horizontalen zwischenliegenden Abschnitt - der darauffolgende Abschnitt 4b ähnlich der oben beschriebenen Konstruktion zum dritten und höchstliegenden Abschnitt 4c hin stetig ansteigt. Damit ist ein zu Beginn der Ausfahrbewegung des Ladebodens 1 noch stärkeres bzw. schnelleres Anheben des hinteren Endes 1a des Ladebodens 1 möglich. Ebenfalls wird der Vorteil der Unterstützung der Kraft des Antriebselementes 6 durch die Gewichtskraft des Ladebodens 1 samt Last erreicht. Statt des Scherenmechanismus 5 ist zur Umsetzung der Kraft des Antriebselementes 6 ein Hebelmechanismus vorgesehen, bei welchem an einem ersten ladebodenfesten, in Ausfahrrichtung weiter hinten liegenden Anschlag 7 ein Hebel 9 angreift, der zwischen seinen Enden drehbar an einem karosseriefesten Anschlag 10 angelenkt ist und an dessen anderem Ende der Arbeitszylinder 6 angreift. Der Boden des Arbeitszylinders 6 ist dabei an einem in Ausfahrrichtung des Ladebodens 1 etwas weiter vorne liegenden zweiten ladebodenfesten Anschlag 7a befestigt. An dem Ende des Hebels 9, welches Ende am Anschlag 7 angreift, wirkt auch wiederum eine Druckfeder 8 ein, welche Druckfeder 8 beim Ausfahren des Ladebodens 1 den Antrieb unterstützt und beim Einfahren des Ladebodens 1 gespannt wird.

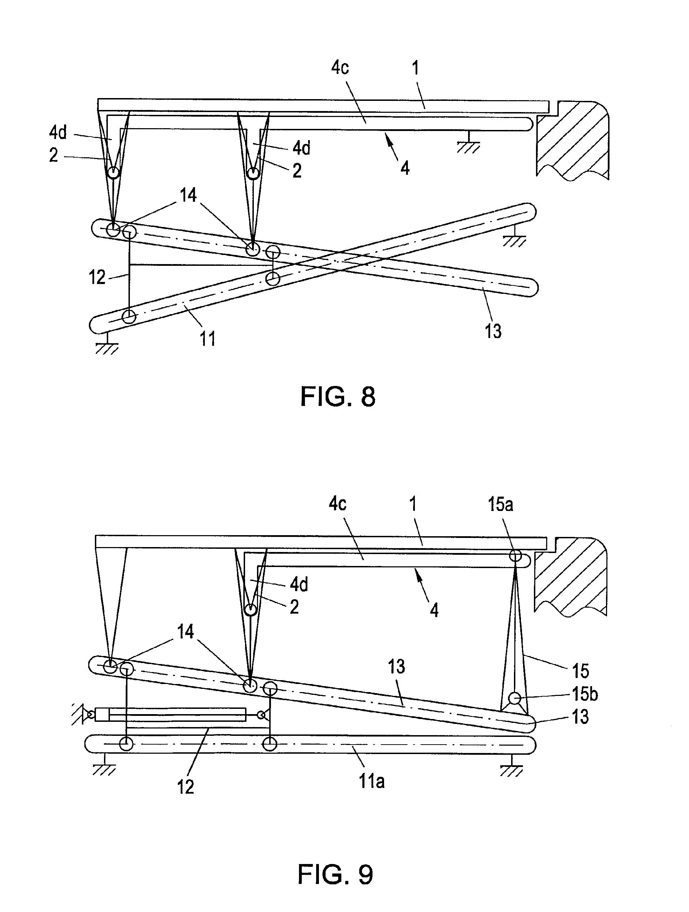

In Fig. 8 ist eine Ausführungsform dargestellt, bei welcher eine fahrzeugfeste und stetig in Ausfahrrichtung des Ladebodens 1 ansteigende Hubrampe 11 vorgesehen ist. Über einen durch das Antriebselement bewegbaren Schlitten 12 wird eine in Ausfahrrichtung des Ladebodens 1 stetig fallende, zweite Rampe im wesentlichen vertikal auf- bzw. abwärts bewegt. Schließlich ist eine separate Führungsbahn 4 vorgesehen, die für jedes Paar von einander bezüglich der Längsmitte des Ladebodens 1 gegenüberliegenden Führungselementen 2 einen ersten, im wesentlichen vertikalen Abschnitt 4d und einen im wesentlichen horizontal verlaufenden, höchstliegenden Abschnitt 4c aufweist. Im Zuge der Bewegung des Schlittens 12 in Ausfahrrichtung des Ladebodens 1 wird die bewegliche Rampe 13 angehoben und aufgrund der Zwangsführung der Führungselemente 2 im Abschnitt 4d der Führungsbahn 4 erfolgt eine vertikale Anhebung des Ladebodens 1 im Sinn einer Parallelverschiebung. Danach geht der Ladeboden 1 bei weiterer Bewegung des Schlittens 12 in eine horizontale Vorwärtsbewegung entlang des Abschnittes 4c der Führungsbahn 4 über, welche Vorwärtsbewegung durch das Zusammenwirken der horizontalen Führung in der Führungsbahn 4 mit Kräften hervorgerufen wird, die durch die weiter aufwärts bewegte bewegliche Rampe 13 auf in oder auf dieser Rampe 13 geführte zusätzliche Führungselemente 14 ausgeübt werden.

Eine geringfügig unterschiedliche, vom grundlegenden Aufbau jedoch gleichartige Konstruktion zur Fig. 8 ist in Fig. 9 gezeigt. In dieser weiteren erfindungsgemäßen Ausführungsform ist eine im wesentlichen horizontal, d.h. parallel zur Ausfahrbewegung des Ladebodens 1, orientierte Führung 11a für den durch das Antriebselement 6 bewegbaren Schlitten 12 vorgesehen. Dieser Schlitten 12 stellt eine Verbindung zu einer in Ausfahrrichtung des Ladebodens 1 stetig fallenden, zweite Rampe 13 dar, die wiederum im wesentlichen vertikal auf- bzw. abwärts bewegbar ist. Schließlich ist auch wieder eine separate Führungsbahn 4 vorgesehen, die für nunmehr nur mehr ein Paar von einander bezüglich der Längsmitte des Ladebodens 1 gegenüberliegenden Führungselementen 2 einen ersten, im wesentlichen vertikalen Abschnitt 4d und einen im wesentlichen horizontal verlaufenden, höchstliegenden Abschnitt 4c aufweist. Um den Ladeboden 1 im Zuge der Bewegung des Schlittens 12 in Ausfahrrichtung des Ladebodens 1 und bei Anhebung der beweglichen Rampe 13 im Sinn einer Parallelverschiebung zu bewegen, ist ein Stützträger 15 im vorderen Bereich der beweglichen Rampe 13 angebracht, auf welchem der in Ausfahrrichtung vordere Teil des Ladebodens 1 gleiten bzw. über die am oberen Ende des Stützträgers 15 angebrachte Rolle 15a laufen kann. Der Stützträger 15 ist über eine drehbare Anlenkung 15 mit der Rampe 13 verbunden, damit der in Ausfahrrichtung des Ladebodens 1 schwenken kann, um dessen hinteres Ende nicht im Vergleich mit dem in der Führungsbahn 4 geführten Ende zu stark anzuheben. Der prinzipielle Bewegungsablauf entspricht jenem der Fig. 8.

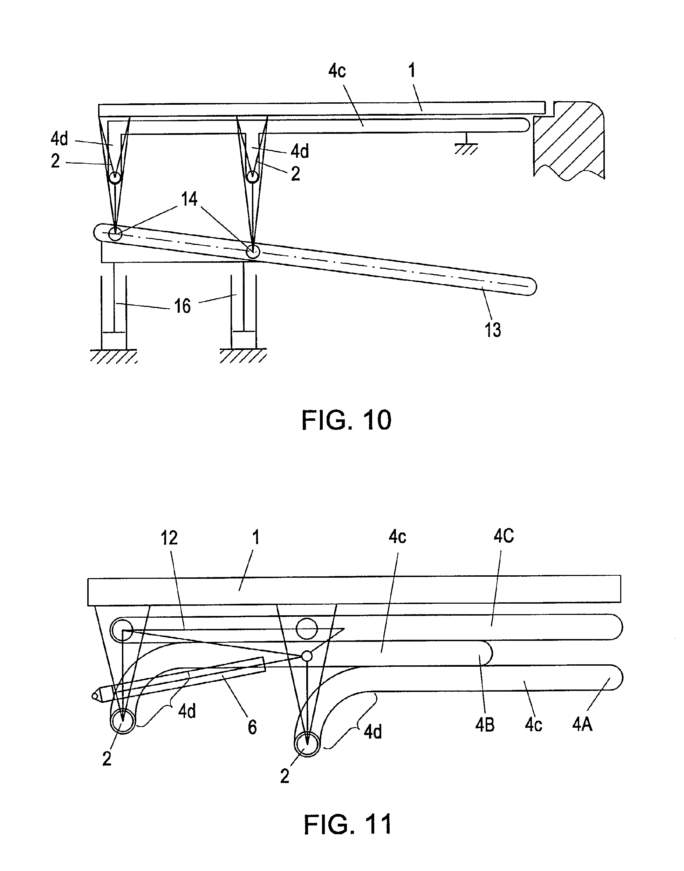

Auch die Konstruktion der Fig. 10 nutzt eine in Ausfahrrichtung des Ladebodens 1 stetig abfallende Hubrampe 13, welche aber nicht durch einen Schlitten, sondern unmittelbar durch ein oder vorteilhafterweise zumindest zwei Hubzylinder 16 als Antriebselemente vertikal verstellt werden kann. Bezüglich der Führungsbahn 4 und des Bewegungsablaufes des Ladebodens 1 beim Ausfahren stimmt diese Variante völlig mit der Fig. 8 überein.

Um eine über den gesamten Ladeboden 1 gleichmäßige Anhebung und eine anschließende im wesentlichen rein horizontale Ausfahrbewegung zu erhalten, kann beispielsweise die in Fig. 11 schematisch dargestellte Ausführungsform verwendet werden. Hier sind zwei gleich ausgeführte Führungsbahnen 4 pro Längsseite des Ladebodens 1 vorgesehen, in welchen die Führungselemente 2 geführt sind. Dabei schließt sich einem in Ausfahrrichtung ersten, ansteigenden Abschnitt 4d, hier jedoch in Form eines Kreissegmentes, nachfolgend ein im wesentlichen horizontaler Abschnitt 4c an. Die Führungsbahn 4A für die in Bewegungsrichtung vorderen Führungselemente 2 liegt dabei parallel zur zweiten Führungsbahn 4B, jedoch in Ausfahrrichtung des Ladebodens 1 und ein wenig vertikal nach unten hin versetzt. Das Antriebselement 6 wird vorteilhafterweise wieder über einen Hebelmechanismus oder einen Scherenmechanismus am Ladeboden 1 angreifen, allenfalls auch an einem in einer dritten Führung 4C laufenden Schlitten.

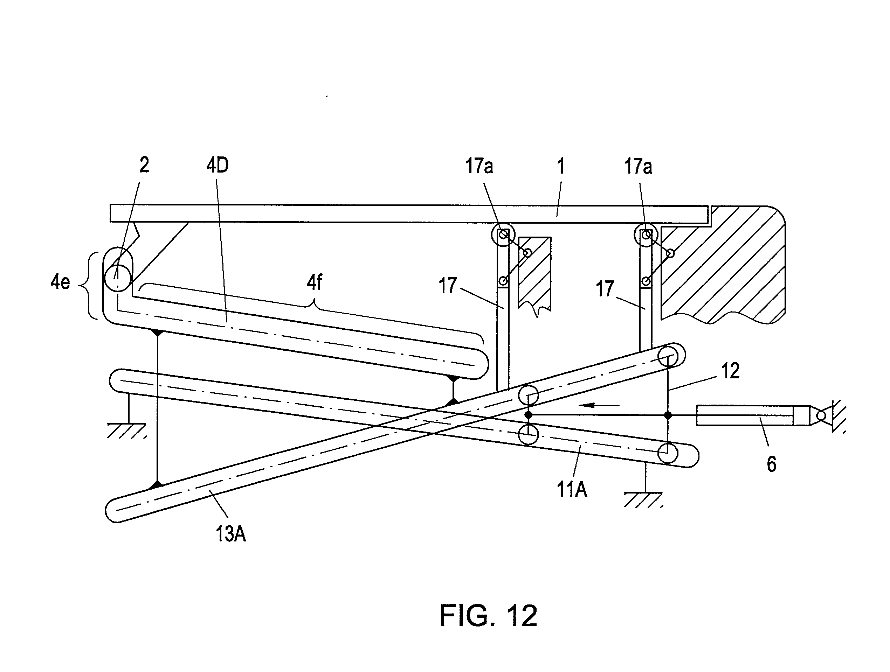

In Fig. 12 ist eine weitere Ausführungsform dargestellt, die wieder auf das Prinzip der Hubrampen zurückgreift. Dabei wirkt das Antriebselement 6 wiederum auf einen Schlitten 12 ein, der dabei aber entgegen der Ausfahrrichtung des Ladebodens 1 verschoben wird. Daher ist auch die Orientierung der fahrzeugfesten Rampe 11A und der Hubrampe 13A vertauscht, erstere ist in Ausfahrrichtung abwärts geneigt, letztere ansteigend. Mit der Hubrampe 13A ist eine Führungsbahn 4D fest verbunden, welche einen in Ausfahrrichtung des Ladebodens 1 ersten und im wesentlichen vertikalen Abschnitt 4e als auch einen darauffolgenden Abschnitt 4f aufweist, der parallel zur fahrzeugfesten Rampe 11 orientiert ist. Im vorderen Bereich der beweglichen Rampe 13A sind Stützen 17 fest angebracht, die den vorderen Teil des Ladebodens 1 abstützen, vorzugsweise über verschwenkbare Rollen 17a.

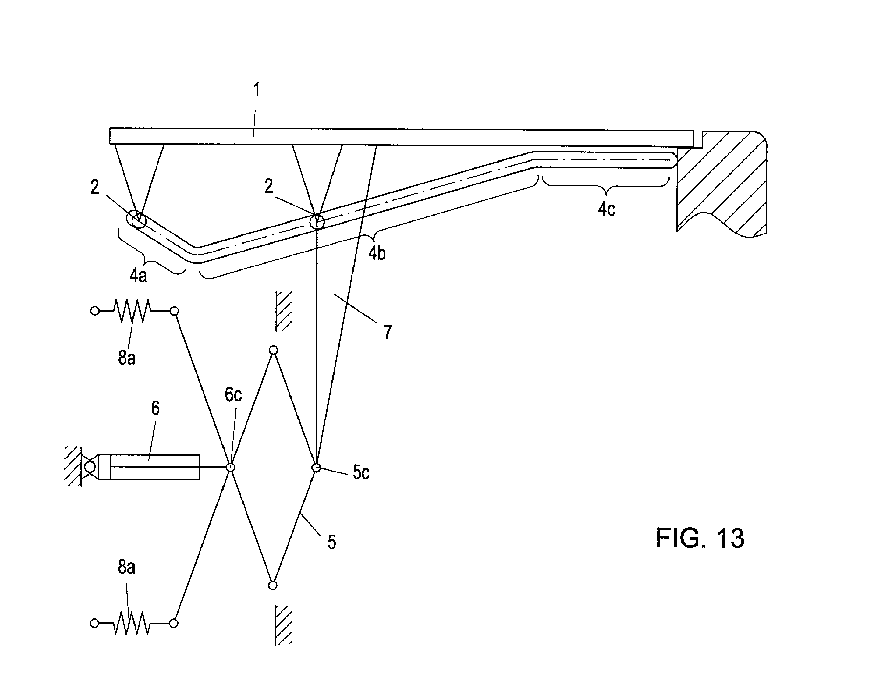

Die weitere erfindungsgemäße Ausführungsform der Fig. 13 geht wieder auf die Grundkonstruktion der Fig. 7 zurück. Wieder ist der erste Abschnitt der Führungsbahn 4a in Bewegungsrichtung abwärts geneigt, während der darauffolgende Abschnitt 4b ähnlich der oben beschriebenen Konstruktion zum dritten und höchstliegenden Abschnitt 4c hin stetig ansteigt. Damit ist ein zu Beginn der Ausfahrbewegung des Ladebodens 1 noch stärkeres bzw. schnelleres Anheben des hinteren Endes 1a des Ladebodens 1 möglich. Zur Umsetzung der Kraft des Antriebselementes 6 ist wieder ein Scherenmechanismus 5 vorgesehen, wobei in dieser Ausführungsform karosseriegeführte Hebel vorgesehen sind, die über Druckfedern 8a in Ausfahrrichtung des Ladebodens 1 vorgespannt sind, welche Druckfedern 8a beim Einfahren gespannt werden. Auch bei dieser Ausführungsform ist zuerst ein direkter Antrieb des Ladebodens 1 durch das Antriebselement 6 vorgesehen, wobei nun zusammen mit dem Ladeboden 1 auch die Hebel des Scherenmechanismus 5 zuerst ohne relative Lageänderung zueinander mitgenommen werden. Sobald aber die Hebel des Scherenmechanismus die Anschläge an der Karosserie erreicht haben und daran anliegen, wirkt auch der zweite Anschlag 6c auf den Kreuzungspunkt der Hebel des Scherenmechanismus 5 ein und bewirkt dessen Betätigung zum geschwindigkeits- bzw. wegübersetzten Antrieb des Ladebodens 1 durch das Ende 5c des Scherenmechanismus 5.

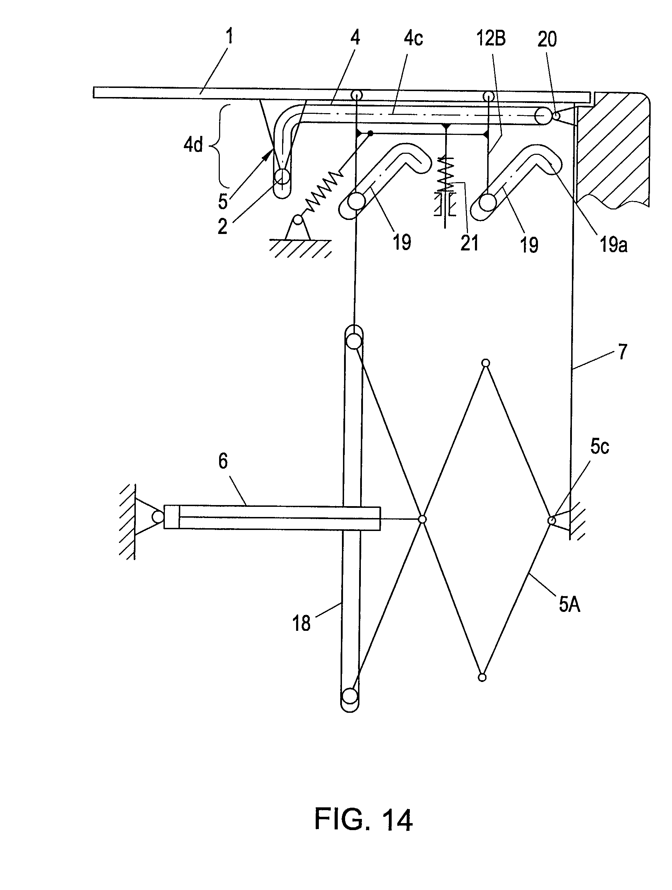

Auch die Konstruktion der Fig. 14 nutzt einen Scherenmechanismus 5A, wobei jedoch die dem Endgelenk 5c abgewandten Enden der sich kreuzenden Hebel senkrecht zur Ausfahrrichtung des Ladebodens 1 in Kulissen bzw. einer Scherenschiene 18 verschiebbar sind, welche Scherenschiene 18 wieder am Schlitten 12B festgelegt ist. Der Antrieb 6 wirkt in der ersten Phase des Anhebens des Ladebodens 1 über den Scherenmechanismus 5A, der am Ladeboden 1 festgelegt ist auf die ebenfalls am Schlitten 12B festgelegte Scherenschiene 18. Da in dieser Phase der Ladeboden 1 entsprechend dem ersten Abschnitt 4d der Führungsbahn 4 nur vertikal nach oben fahren kann, wird über die zusammenfahrende Schere 5A die Scherenschiene 18 und damit der Schlitten 12B in Richtung Ausfahren bewegt. Der Schlitten 12B fährt entlang der schräg in Ausfahrrichtung ansteigenden Führungsrampen 19, welche einen abfallenden Endabschnitt 19a, aufweisen, nach oben. Die Führungselemente 2 am Ladeboden 1 heben diesen senkrecht an. Beim Anheben schwenkt die Führungsbahn 4 um ein Gelenk 20, begrenzt durch den Hubanschlag, nach oben. Erst wenn das Führungselement 2 des Ladebodens 1 im abfallenden Abschnitt 19a der schrägen Rollenbahnen 19 einen dort vorgesehenen Auslösehebel betätigt, wird eine Hubfeder 21 gespannt und die Führungsbahn 4 schwenkt nach unten und gibt dem darin geführten Führungselement 2 des Ladebodens 1 die Horizontalbewegung entlang des Abschnittes 4c der Führungsbahn 4 frei. Beim weiteren Ausfahren des Antriebselementes 6 fährt die Schere 5A bei nun feststehender Scherenschiene 18 schnell aus und bewegt den Ladeboden 1 horizontal in Richtung Ausfahren.

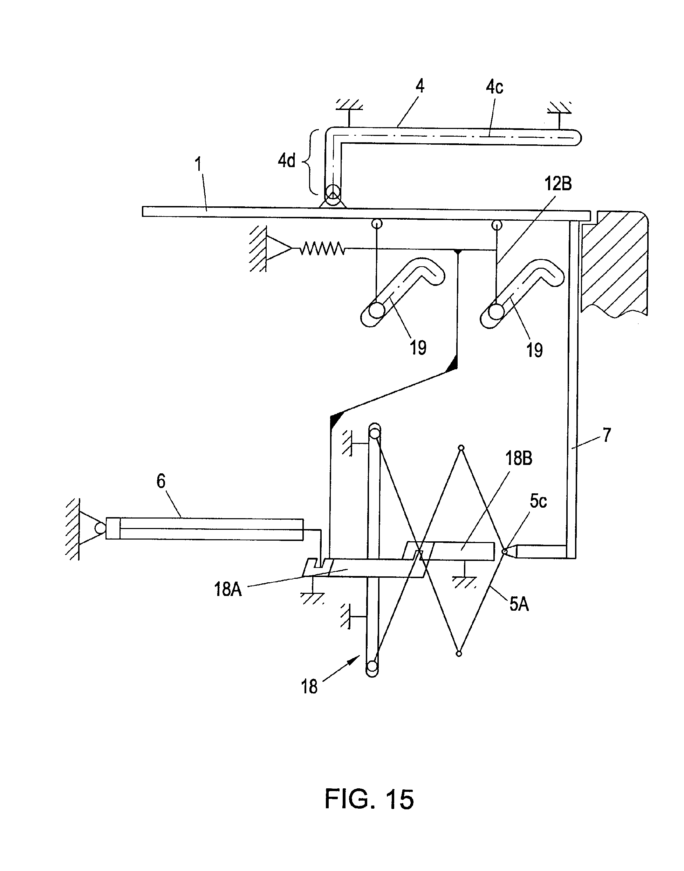

Bei der Ausführungsform der Fig. 15 schließlich wirkt das Antriebselement 6 zuerst auf eine wagenfeste Kulisse 18A, die in einer gestellfesten Führungsbahn 18 läuft, bis der Schlitten 12B im oberen Ende der schrägen Führungsrampen 19 einrastet. Danach wird bei weiterem Ausfahren des Antriebselementes 6 das Stangenende auf einen zweiten, diesmal scherenfesten Kulissenstein 18B übergeben, der dann die Schere 5A ausfährt und ein schnelles horizontales Ausfahren des Ladebodens 1 bewirkt.

Allen erfindungsgemäßen Lösungen ist somit gemein, daß die Hubbewegung und die Verschiebebewegung des Ladebodens 1 in eine kombinierte Bewegung zusammengefaßt wird. Der Bewegungsweg des Ladebodens 1 ist durch Führungsbahnen 4 bestimmt. Da für das Heben einer Last wesentlich mehr Arbeit zu verrichten ist als für das Verschieben, das Antriebselement 6 aber nur eine begrenzte Leistung abgeben kann, wird in der erfindungsgemäßen Ausführung die Hubbewegung in eine kombinierte Hub und Schiebebewegung übergeführt.

## Patentansprüche

1. Ausziehbarer Ladeboden, insbesonders für Kraftfahrzeuge, der mit Führungselementen, beispielsweise Rollen oder Gleitern, entlang zumindest einer im wesentlichen horizontalen Führungsbahn verlagerbar ist, wobei allenfalls ein Antriebsmittel vorgesehen ist, welches den Ladeboden zumindest mittelbar zumindest in einer Richtung mit einer Kraft beaufschlagen kann, **dadurch gekennzeichnet, daß** zumindest eine Führungsbahn (4) mindestens zwei Abschnitte aufweist, welche miteinander einen Winkel größer als 0° und maximal 90° einschließen.

2. Ladeboden nach Anspruch 1, **dadurch gekennzeichnet, daß** zumindest eine Führungsbahn (4) zwei im wesentlichen parallele, jedoch vertikal beabstandete Abschnitte (4a, 4c) aufweist, welche durch einen dritten Abschnitt (4b) miteinander verbunden sind, der den vertikalen Abstand überbrückt, wobei der in Ausfahrrichtung gesehen letzte Abschnit vertikal gesehen am höchsten angeordnet ist.

3. Ladeboden nach Anspruch 1, **dadurch gekennzeichnet, daß** zumindest eine Führungsbahn (4) zwei Abschnitte aufweist, wobei ein in Ausfahrrichtung des Ladebodens gesehen erster Abschnitt (4a) nach außen hin abfällt und wobei der anschließende Abschnitt (4b) nach außen hin ansteigt.

4. Ladeboden nach Anspruch 3, **dadurch gekennzeichnet, daß** sich den beiden Abschnitten (4a, 4b) unmittelbar ein dritter, äußerster Abschnitt (4c) anschließt, der im wesentlichen horizontal verläuft.

5. Ladeboden nach Anspruch 1, **dadurch gekennzeichnet, daß** zumindest eine horizontal verlaufende Führungsbahn (4c) vorgesehen ist, welche als ersten Abschnitt in Ausfahrrichtung zumindest einen, im wesentlichen vertikalen Abschnitt (4d, 4f) aufweist, wobei der Ladeboden zusätzlich noch mit einem Hubmechanismus in Verbindung steht.

6. Ladeboden nach Anspruch 5, **dadurch gekennzeichnet, daß** der Hubmechanismus aus einer fahrzeugfesten Hubrampe (11, 11a) und einer nach außen hin abwärts geneigten zweiten Führung (13) besteht, welche zweite Führung mittels eines Verbindungsschlittens (12) parallel in vertikaler Richtung verschiebbar ist.

7. Ladeboden nach Anspruch 6, **dadurch gekennzeichnet, daß** ein Antriebsmittel (6) am Verbindungsschlitten (12) angreift.

8. Ladeboden nach Anspruch 6 oder 7, **dadurch gekennzeichnet, daß** die fahrzeugfeste Hubrampe (11) nach außen hin ansteigendend ausgeführt ist.

9. Ladeboden nach Anspruch 5, **dadurch gekennzeichnet, daß** der Hubmechanismus aus zumindest einem im wesentlichen vertikalen Antriebsmittel (16) und einer nach außen hin abwärts geneigten zweiten Führung (13) besteht, welche zweite Führung allenfalls mittels eines Verbindungsschlittens parallel in vertikaler Richtung verschiebbar ist.

10. Ladeboden nach Anspruch 1, **dadurch gekennzeichnet, daß** zumindest zwei horizontal verlaufende Führungsbahnen (4A, 4B) zumindest in Bewegungsrichtung des Ladebodens (1) beabstandet voneinander vorgesehen ist, welche aus einem vertikal nach oben verlaufenden ersten Abschnitt (4d) in Ausfahrrichtung und einem sich unmittelbar daran anschließenden, im wesentlichen horizontalen Abschnitt (4c) bestehen.

11. Ladeboden nach einem der vorhergehenden Ansprüche, **dadurch gekennzeichnet, daß** zwei gleich gestaltete Führungsbahnen (4) an den zwei gegenüberliegenden Längsseiten des Ladebodens (1) vorgesehen sind.

12. Ladeboden nach einem der Ansprüche 1 bis 11, **dadurch gekennzeichnet, daß** ein im wesentlichen horizontal liegender, vorzugsweise hydraulischer Arbeitszylinder als Antriebsmittel (6) vorgesehen ist.

13. Ladeboden nach einem der Ansprüche 1 bis 12, **dadurch gekennzeichnet, daß** zwischen dem Antriebsmittel (6) und dem Ladeboden (1) zumindest über einen Teilbereich der Ausfahrbewegung ein Hebelmechanismus zwischengeschaltet ist.

14. Ladeboden nach Anspruch 13, **dadurch gekennzeichnet, daß** der Hebelmechanismus als Scherenmechanismus (5) ausgebildet ist, von welchem ein sich kreuzendes Hebelpaar am Fahrzeug angelenkt und das abschließende Drehgelenk (5c) mit dem Ladeboden (1) verbunden bzw. daran angreift ist.

15. Ladeboden nach Anspruch 14, **dadurch gekennzeichnet, daß** das Antriebsmittel (6) zwei in Bewegungsrichtung des Ladebodens (1) beabstandete Anschläge (6b, 6c) aufweist, wobei ein Anschlag (6b) in einem ersten Abschnitt der Ausfahrbewegung am Ladeboden (1) oder am abschließenden Drehgelenk (5c) des Scherenmechanismus (5) anliegt, und wobei der zweite Anschlag (6c) in einem zweiten Abschnitt der Ausfahrbewegung am Kreuzungspunkt der sich kreuzenden Hebel des Scherenmechanismus (5) anliegt.

16. Ladeboden nach Anspruch 14 oder 15, **dadurch gekennzeichnet, daß** zwischen dem Ladeboden (1) oder dem abschließenden Drehgelenk (5c) des Scherenmechanismus (5) und dem Kreuzungspunkt der sich kreuzenden Hebel auf der dem zweiten Anschlag (6c) gegenüberliegenden Seite ein elastisches Element, vorzugsweise eine Druckfeder (8), derart eingespannt ist, daß das elastische Element (8) über den gesamten ersten Abschnitt der Ausfahrbewegung am Kreuzungspunkt anliegt und diesen mit einer Kraft beaufschlagt.
